# EUROPEAN PATENT APPLICATION

(11) **EP 4 716 308 A1**
(43) Date of publication of application: **25.03.2026**
(21) Application number: 23937000.0
(22) Date of filing: 16.05.2023
(51) Int. Cl.: H04W 48/18

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: MAO, Yuxin, Beijing 100085 (CN)
(74) Representative: Hersina, Günter
(86) International application number: PCT/CN2023/094629
(87) International publication number: WO 2024/234316

(57) **Abstract**

Embodiments of the present disclosure provide an information processing method and apparatus, a communication device, and a storage medium. The information processing method executed by a user equipment (UE) may comprise: setting a default access mode in response to receiving a data transmission replication pause message and not configuring a primary access mode, the default access mode being one of a plurality of access modes currently used by the UE, and the default access mode being used for pausing data transmission after data transmission replication according to the data transmission replication pause message; and canceling the setting of the default access mode in response to receiving a data transmission replication resume message.

## Description

### TECHNICAL FIELD

The present disclosure relates to, but is not limited to, the field of wireless communication technologies, and in particular to an information processing method, apparatus, a communication device, and a storage medium.

### BACKGROUND

An Access Traffic Steering, Switching, Splitting (ATSSS) allows a user equipment (UE) to simultaneously access a 5G core network using both 3rd Generation Partnership Project (3GPP) and non-3GPP access networks, and to establish a Multi Access Protocol Data Unit (MA PDU) session. This allows the same service data flow to use two access points simultaneously for switching, splitting, backup, and other transmission manners, which helps to improve network resource utilization efficiency and enhance the business experience.

### SUMMARY

The present disclosure provides an information processing method and apparatus, a communication device, and a storage medium.

A first aspect of the present disclosure provides an information processing method. The method is performed by a user equipment (UE), and includes:
setting an access leg in response to receiving a data duplication suspending message and not configuring a primary access, where the access leg is one of multiple accesses currently used by the UE, and the access leg is used for a data transmission after suspending data duplication; and
cancelling the setting of the access leg in response to receiving a data duplication resuming message.

A second aspect of the present disclosure provides an information processing method. The method is performed by a network device, and the method includes:
setting an access leg in response to sending a data duplication suspending message and not configuring a primary access, where the access leg is one of multiple accesses currently used by a UE, and the access leg is used for a data transmission after suspending data duplication; and
cancelling the setting of the access leg in response to sending a data duplication resuming message.

A third aspect of the present disclosure provides an information processing apparatus. The apparatus includes:
a first processing module, configured to set an access leg in response to receiving a data duplication suspending message and not configuring a primary access, where the access leg is one of multiple accesses currently used by the UE, and the access leg is used for a data transmission after suspending data duplication; and
a second processing module, configured to cancel the setting of the access leg in response to receiving a data duplication resuming message.

A fourth aspect of the present disclosure provides an information processing apparatus. The apparatus includes:
a third processing module, configured to set an access leg in response to sending a data duplication suspending message and not configuring a primary access, where the access leg is one of multiple accesses currently used by a UE, and the access leg is used for a data transmission after suspending data duplication; and
a fourth processing module, configured to cancel the setting of the access leg in response to sending a data duplication resuming message.

A fifth aspect of the present disclosure provides a communication device. The device includes a processor, a transceiver, a memory, and an executable program stored in the memory and executable by the processor. When the processor executes the executable program, the processor performs the information processing method as provided in the first or second aspect described above.

A sixth aspect of the present disclosure provides a computer storage medium storing an executable program. After the executable program is executed by a processor, it enables implementing the information processing method provided in the first or second aspect described above.

According to the technical solutions provided in the present disclosure, when the data duplication is suspended and no primary access is configured, the data transmission between the UE and the network device can be achieved using the unified access leg during the suspension of the data duplication. This avoids time sequence issues caused by the uplink and downlink data being transmitted using different accesses, thereby improving the reliability of the data transmission. Furthermore, after resuming the data duplication, the setting of the access leg is cancelled, which can restore the access setting of the UE and the network device before suspending the data duplication, reducing communication anomalies caused by the difference in access settings before and after the data duplication is suspended.

It should be understood that the technical solutions provided in the aspects and embodiments of the present disclosure are exemplary and explanatory only, and are not intended to limit the embodiments of the present disclosure.

### BRIEF DESCRIPTION OF THE DRAWINGS

The accompanying drawings, which are incorporated in and form part of the specification, illustrate the embodiments of the present disclosure and, together with the specification, serve to explain the principles of the embodiments of the present disclosure.
Fig. 1A is a schematic diagram of a wireless communication system according to an example embodiment.
Fig. 1B illustrates an architecture of a communication system supporting ATSSS according to an example embodiment.
Fig. 2A is a flowchart illustrating an information processing method according to an example embodiment.
Fig. 2B is a flowchart illustrating an information processing method according to an example embodiment.
Fig. 2C is a flowchart illustrating an information processing method according to an example embodiment.
Fig. 2D is a flowchart illustrating an information processing method according to an example embodiment.
Fig. 2E is a schematic flowchart illustrating an information processing method according to an example embodiment.
Fig. 3A is a flowchart illustrating an information processing method according to an example embodiment.
Fig. 3B is a flowchart illustrating an information processing method according to an example embodiment.
Fig. 3C is a flowchart illustrating an information processing method according to an example embodiment.
Fig. 3D is a flowchart illustrating an information processing method according to an example embodiment.
Fig. 4A is a flowchart illustrating an information processing method according to an example embodiment.
Fig. 4B is a flowchart illustrating an information processing method according to an example embodiment.
Fig. 5A is a structural schematic diagram of an information processing apparatus according to an example embodiment.
Fig. 5B is a structural schematic diagram of an information processing apparatus according to an example embodiment.
Fig. 6A is a structural schematic diagram of a terminal according to an example embodiment.
Fig. 6B is a structural schematic diagram of a network device according to an example embodiment.

### DETAILED DESCRIPTION

Example embodiments will now be described in detail, examples of which are illustrated in the accompanying drawings. When the following description refers to the accompanying drawings, unless otherwise indicated, the same numbers in different drawings represent the same or similar elements. Implementations described in the following example embodiments do not represent all embodiments consistent with the embodiments of the present disclosure. Rather, they are merely examples of apparatuses and methods consistent with some aspects of embodiments of the present disclosure.

The term used in the present disclosure is for the purpose of describing particular embodiments only and is not intended to limit the scope of the present disclosure. The singular forms "a", "an", and "the" used in the present disclosure are also intended to include the plural forms unless the context clearly indicates otherwise. It should also be understood that the term "and/or" as used herein refers to and includes any or all possible combinations of one or more associated listed items.

It should be understood that although the terms first, second, third, etc. may be used to describe various information in the embodiments of the present disclosure, such information should not be limited to these terms. These terms are only used to distinguish information of the same type from one another. For example, without departing from the scope of the embodiments of the present disclosure, first information may also be referred to as second information, and similarly, second information may also be referred to as first information. Depending on the context, the word "if" as used here can be interpreted as "when", "in a case that", or "in response to determining that".

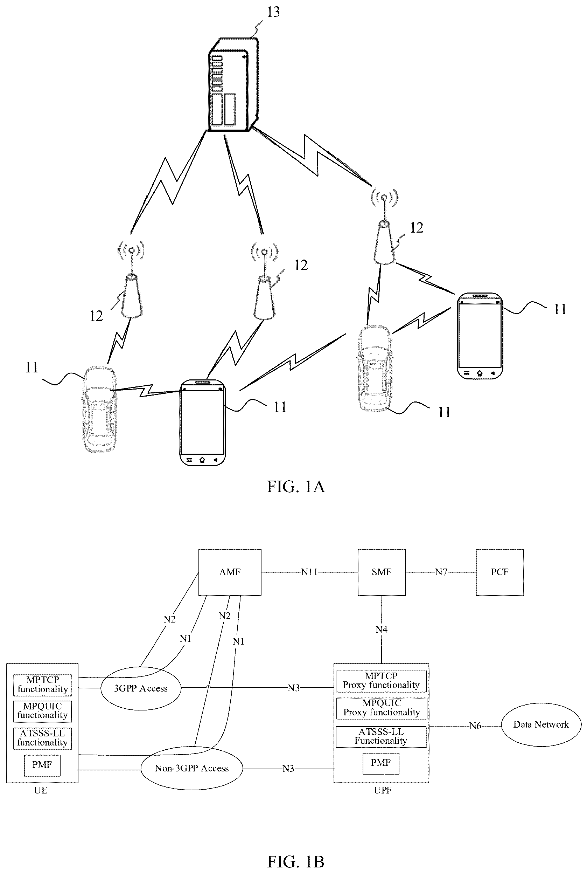

Please refer to Fig. 1A, which shows a structural schematic diagram a wireless communication system provided in an embodiment of the present disclosure. As shown in Fig. 1A, the wireless communication system is a communication system based on cellular mobile communication technologies. The wireless communication system may include: several UEs 11, one or more access devices 12, and one or more core network devices 13.

The UE 11 may be a device that provides voice and/or data connectivity to a user. The UE 11 may communicate with one or more core networks via a Radio Access Network (RAN). The UE 11 may be an Internet of Things (IoT) UE, such as a sensor device, a mobile phone (or "cellular" phone), and a computer with an IoT UE. For example, it may be a fixed, portable, pocket, handheld, computer-embedded, or vehicle-mounted device. For example, a station (STA), a subscriber unit, a subscriber station, a mobile station, a mobile station, a remote station, an access point, a remote terminal, an access terminal, a user terminal, a user agent, a user device, or a UE. Alternatively, the UE 11 may also be a device for unmanned aerial vehicles. Alternatively, the UE 11 may also be an in-vehicle device, such as an onboard computer with wireless communication capabilities, or a wireless communication device connected to an external onboard computer. Alternatively, the UE 11 may also be a roadside device, such as a street light, traffic light, or other roadside device with wireless communication capabilities.

The access device 12 may be a network-side device in a wireless communication system. The wireless communication system may be a fourth-generation mobile communication (4G) system, also known as a Long Term Evolution (LTE) system; or it may be a 5G system, also known as a new radio (NR) system or a 5G NR system. Alternatively, the wireless communication system may be a next generation system after 5G. In the 5G system, the access network may be referred to as a New Generation-Radio Access Network (NG-RAN). Alternatively, an MTC system.

The access device 12 may be an evolved access device (eNB) used in a 4G system. Alternatively, the access device 12 may also be an access device (gNB) in a 5G system that adopts a central-distributed architecture. When the access device 12 adopts a centralized-distributed architecture, it typically includes a central unit (CU) and at least two distributed units (DUs). The CU is provided with a protocol stack consisting of a Packet Data Convergence Protocol (PDCP) layer, a Radio Link Control (RLC) layer, and a Median access Control (MAC) layer. The distributed unit is provided with a Physical (PHY) layer protocol stack. The specific implementation of the access device 12 is not limited in the embodiments of the present disclosure.

The access device 12 and the UE 11 may establish a wireless connection via a radio air interface. In different implementations, the radio air interface is a radio air interface based on a fourth-generation mobile communication network technology (4G) standard, or the radio air interface is a radio air interface based on a fifth-generation mobile communication network technology (5G) standard, such as a new radio air interface; or the radio air interface may also be a radio air interface based on a next-generation mobile communication network technology standard based on 5G.

The core network device 13 may be connected to the access device 12. The typical core network device may include, but is not limited to: an Access Management Function (AMF), a Session Management Function (SMF), a User Data Management (UDM), and a Policy Control Function (PCF).

As shown in Fig. 1B, the UE may access a User Plane Function (UPF) via an N3 interface in two ways of 3GPP access or non-3GPP access. The UE may also connect to an Access and Mobility Management Function (AMF) via an N1 interface. The UE may support a Multipath Transmission Control Protocol (Multipath TCP, MPTCP) functionality, a Multipath Quick UDP Internet Connections (Multipath QUIC, MPQUIC) functionality, an ATSSS Low-Layer (ATSSS-LL) functionality, and a Performance Measurement Functionality (PMF). The UPF may support an MPTCP proxy functionality, an MPQUIC functionality, and a PMF. Both types of access network device that support the 3GPP access and the non-3GPP access are connected to the AMF via an N2 interface. The AMF is connected to an SMF via an N11 interface, and the SMF is connected to a Policy Control Function (PCF) via an N7 interface. The UPF is connected to a data network via an N6 interface.

A redundant steering mode is one of steering modes supported by the ATSSS. The redundant steering mode enables a transmitter (a UE for uplink traffic or a UPF for downlink traffic) to support redundant traffic steering with duplication criteria, so as to improve data transmission reliability and latency.

Before enabling the redundancy steering mode, the UE and the UPF may be configured with a primary access or not.

For example, before enabling the redundancy steering mode, the network may use ATSSS rules and N4 rules to configure the primary access for the UE regardless of whether a threshold is set. If the primary access mode is configured, the UE and the UPF may transmit a service data flow on the primary access and duplicate the transmission on another access.

However, before enabling the redundancy steering mode, for a transmission with a threshold setting, if the network device does not configure the primary access for the UE, the UE and UPF may set the primary access according to their implementation during the data transmission. For a transmission without a threshold setting, if the network device does not configure the primary access for the UE, the UE and the UPF will duplicate the service data flow transmitted on both accesses (for example, if service data flow 1 is transmitted using access A, then access B will be used for backup transmission; if service data flow 2 is transmitted using access B, then access A will be used for backup transmission). If the UPF needs to suspend the duplication, it may send a data duplication suspending request message to the UE. The request message may indicate a type of data for which the data duplication is being suspended. Once the UE receives the message, it needs to suspend duplicating the indicated type of data. During the suspension of the duplication, data transmission between the UE and the UPF is performed using the primary access. However, for the transmission without the threshold setting, if no primary access is configured, it is unclear how the access will be used for the data transmission between the UE and the UPF during the suspension of the duplication.

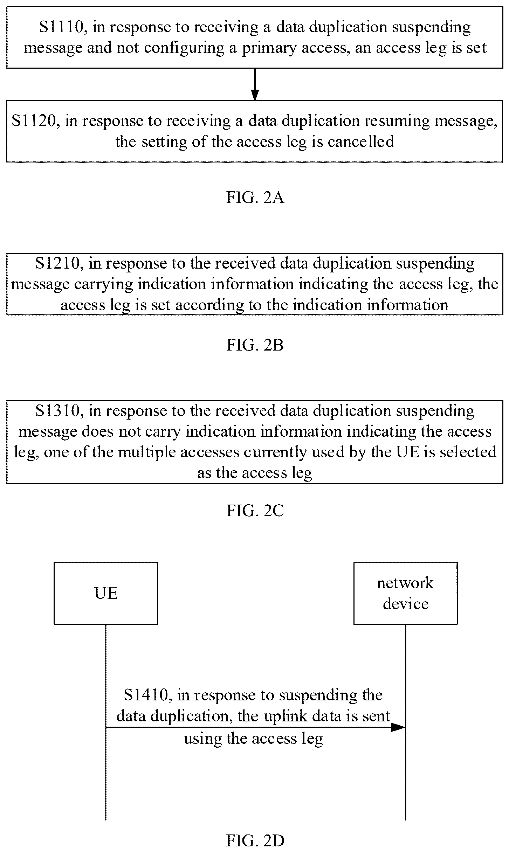

As shown in Fig. 2A, an embodiment of the present disclosure provides an information processing method. The method is performed by a UE, and the method includes the following steps.

S1110, in response to receiving a data duplication suspending message and not configuring a primary access, an access leg is set, where the access leg is one of multiple accesses currently used by the UE, and the access leg is used for a data transmission after suspending data duplication.

S1120, in response to receiving a data duplication resuming message, the setting of the access leg is cancelled.

For example, the multiple accesses currently used by the UE include a 3GPP access and a non-3GPP access.

For example, the access leg may be either a 3GPP access or a non-3GPP access.

For example, the 3GPP access refers to an access based on a 3GPP radio protocol.

For example, the non-3GPP access requires a non-3GPP interworking function (N3IWF) to connect to a 3GPP 5G core network device. For example, a Wireless Local Area Network (WLAN) is connected to the 3GPP 5G core network device via the N3IWF.

The data duplication suspending message may be used to instruct the UE to suspend the data duplication when the UE is in a redundant steering mode.

For example, the data duplication suspending message includes one or more bits, the one or more bits are used to carry indication information that instructs the UE to suspend the data duplication.

In some embodiments, the UE receives the data duplication suspending message sent by a network device.

For example, the network device is a core network device.

Optionally, the UE receives the data duplication suspending message sent by a UPF.

In a redundancy steering mode, the UE suspends the data duplication based on the received data duplication suspending message.

For example, after receiving the data duplication suspending message, the UE suspends the data duplication after sending a response message to the network device.

If no primary access is configured during the suspension of the data duplication, it is required to set the access leg, so that the UE and the network device may use a unified access leg for data interaction during the suspension of the data duplication.

In some embodiments, as shown in FIG. 2A, the present disclosure provides an information processing method. The method is performed by a UE, and includes:
setting an access leg in response to receiving a data duplication suspending message and not configuring a primary access;
determining whether the access leg set by the UE is same as an access leg set by a network device; and
in response to the access leg set by the UE being different from the access leg set by the network device, changing the access leg set by the UE or the access leg set by the network device, to make the access leg set by the UE same as the access leg set by the network device.

For example, after determining to suspend the data duplication, the UE may set the access leg according to a local policy or a default configuration.

For example: a random policy, which randomly selects one of the current accesses as the access leg.

The default configuration may specify the access leg.

After the UE determines the access leg and receives downlink data, it may determine whether the access leg set by the UE is same as the access leg set by the network device.

For example, if the access leg used for the downlink data is different from the access leg used for uplink data, the UE may reset the access leg to the access leg used for the downlink data.

If the access leg set by the UE is consistent with the access leg set by the network device (i.e., the same), the UE and the network device use the access leg to interact with each other during the suspension of the data duplication.

In some embodiments, if the access leg set by the UE is different from the access leg set by the network device, the UE resets the access leg, and the access leg reset by the UE is same as the access leg set by the network device.

In some other embodiments, the access leg set by the UE is different from the access leg set by the network device. The network device resets the access leg, and the access leg reset by the network device is same as the access leg set by the network device.

In some embodiments, the access leg set by the UE is different from the access leg set by the network device. One of the UE and the network device is configured to perform a check on whether the access legs are the same and to reset the access leg.

By setting the access leg, checking the access legs used for the uplink and downlink data, and resetting the access leg, the access leg used by the UE for the uplink data and the access leg used by the network device for the downlink data can be kept consistent. This reduces the problem of out-of-order of the service time sequence caused by the UE and the network device transmitting the data on different accesses, and improves the reliability of data transmission.

In some embodiments, receiving the data duplication suspending message sent by the network device includes: receiving the data duplication suspending message sent by the network device when detecting congestion.

In some embodiments, the data duplication suspending message carries type indication information, which indicates a type of service that is required to be suspended.

After receiving the data duplication suspending message carrying the type indication information, the UE suspends duplicating a data corresponding to the traffic type indicated by the type indication information.

There may be two or more types of data to be duplicated. Choosing to suspend the duplication of the data for some traffic types, rather than suspending the duplication of the data for all traffic types, can improve the congestion situation and help to ensure the reliability and low latency of the data during the communication.

In some embodiments, prior to step S1120, the information processing method further includes: receiving a data duplication resuming message sent by the network device.

The data duplication resuming message instructs to resume the data duplication.

The data duplication resuming message may be a request message sent by the network device to the UE when the congestion situation is improved.

The UE resumes the data duplication based on the received data duplication resuming message.

For example, upon receiving the data duplication resuming message, the UE sends a response message to the network device and resumes the data duplication.

After resuming the data duplication, by canceling the setting of the access leg, the access settings of the UE and the network device before suspending the data duplication can be resumed, reducing the communication anomalies caused by differences in access settings before and after the data duplication is suspended.

As shown in Fig. 2B, an embodiment of the present disclosure provides an information processing method. The method is performed by a UE, and the method includes the following step.

S1210, in response to the received data duplication suspending message carrying indication information indicating the access leg, the access leg is set according to the indication information.

The UE may determine the access leg from the multiple accesses currently used by the UE based on the indication information carried in the data duplication suspending message.

For example, if the UE currently uses multiple accesses including a 3GPP access and a non-3GPP access, and the indication information indicates that the 3GPP access is the access leg, then the UE determines that the access leg is the 3GPP access.

For example, the indication information includes a setting field, which indicates that the 3GPP access is the access leg, so the UE sets the 3GPP access as the access leg. If the setting field indicates that the non-3GPP access is the access leg, then the UE sets the non-3GPP access as the access leg.

The data duplication suspending message may be used to instruct the UE to suspend data duplication when the UE adopts a redundant steering mode for backup transmission.

For example, the data duplication suspending message includes one or more bits, and the one or more bits is used to carry indication information that instructs the UE to suspend the data duplication.

In some embodiments, the UE receives the data duplication suspending message sent by the network device.

For example, the network device is a core network device.

Optionally, the UE receives the data duplication suspending message sent by a UPF.

In the redundancy steering mode, the UE suspends the data duplication based on the received data duplication suspending message.

If an access leg set by the UE is same as an access leg set by the network device, the UE and the network device use the access leg to interact with each other during the suspension of the data duplication.

In some embodiments, if the access leg set by the UE is different from the access leg set by the network device, the UE resets the access leg, and the access leg reset by the UE is the same as the access leg set by the network device.

In some other embodiments, the access leg set by the UE is different from the access leg set by the network device. The network device resets the access leg, and the access leg reset by the network device is same as the access leg set by the network device.

In some embodiments, the access leg set by the UE is different from the access leg set by the network device. One of the UE and the network device is configured to perform a check on whether the access legs are the same and to reset the access leg.

By setting the access leg, checking the access legs used for the uplink and downlink data, and/or resetting the access leg, the access leg used by the UE for the uplink data and the access leg used by the network device for the downlink data can be kept consistent. This reduces the problem of out-of-order of the service time sequence caused by the UE and the network device transmitting the data on different accesses, and improves the reliability of data transmission.

As shown in Fig. 2C, an embodiment of the present disclosure provides an information processing method. The method is performed by a UE, and includes the following step.

S1310, in response to the received data duplication suspending message does not carry indication information indicating the access leg, one of the multiple accesses currently used by the UE is selected as the access leg.

For example, the access leg may be either a 3GPP access or a non-3GPP access.

For example, the 3GPP access refers to an access based on a 3GPP radio protocol.

For example, the non-3GPP access requires an N3IWF to connect to a 3GPP 5G core network device. For example, a WLAN is connected to the 3GPP 5G core network device via the N3IWF.

For example, the UE may set the access leg according to a local policy or a default configuration.

For example: a random policy, which randomly selects one of the current accesses as the access leg.

The default configuration may specify the access leg.

After the UE determines the access leg and receives downlink data, it may determine whether the access leg set by the UE is same as the access leg set by the network device.

For example, if the access leg used for the downlink data is different from the access leg used for uplink data, the UE may reset the access leg to the access leg used for the downlink data.

If the access leg set by the UE is same as the access leg set by the network device, the UE and the network device use the access leg to interact with each other during the suspension of the data duplication.

In some embodiments, during the suspension of the data duplication, the UE may determine the access leg based on the received downlink data.

For example, if the downlink data received by the UE comes from the 3GPP access, the UE knows that the access leg determined by the network device is the 3GPP access, and the UE may set the access leg to the 3GPP access.

For another example, during a period from suspending the data duplication until the UE receives a first downlink data packet, if the UE does not have any uplink data to send, the UE may leave the access leg unset. Once the UE receives the first downlink data packet, the UE may set the access leg to be the access leg used for the downlink data.

In some embodiments, during the suspension of data duplication, the UE may determine whether to reset the access leg based on whether the access leg used for the uplink data is same as the access leg used for the downlink data.

For example, during a period from suspending the data duplication until the UE receives a first downlink data packet, if the UE needs to send the uplink data, the UE sets the access leg. If the access leg used for the downlink data received by the UE is different from the access leg used by the uplink data, the UE may reset the access leg.

In some embodiments, the UE resets the access leg to the access leg used for the transmission of the downlink data.

Resetting the access leg by the UE allows both the UE and the network device to use the same access leg mode for data transmission, reducing the problem of out-of-order of the time sequence caused by the UE and the network device transmitting data on different accesses and improving the reliability of data transmission.

In some embodiments, if the access leg used for the uplink data is different from the access leg used for the downlink data, the network device may reset the access leg.

In some embodiments, if the access leg used for the uplink data is different from the access leg used for the downlink data, the network device may configure either the UE or the network device to perform a check on whether the access legs are consistent and/or to reset the access leg.

For example, if the access leg used for the uplink data is different from the access leg used for the downlink data, the UE may not reset the access leg when it receives a first downlink data packet after suspending the data duplication. If the UE receives a second downlink data packet, and the second downlink data packet uses the same access leg as the uplink data packet, it indicates that the network device has reset the access leg. In this case, the UE does not need to reset the access leg.

For example, if the access leg used for the uplink data is different from the access leg used for the downlink data, and a first downlink data packet and a second downlink data packet received by the UE after suspending the data duplication use the same access leg, it indicates that the network device has not reset the access leg. In this case, the UE may reset the access leg, so that the access leg used by the UE to send the uplink data is the same as the access leg used by the network device to send the downlink data.

By setting the access leg, the access leg used by the UE for the uplink data is kept consistent with the access leg used by the network device for the downlink data, reducing the problem of out-of-order of the service time sequence caused by the UE and the network device transmitting data on different accesses, and improving the reliability of data transmission.

The data duplication suspending message may be used to instruct the UE to suspend the data duplication when the UE is in a redundant steering mode.

For example, the data duplication suspending message includes one or more bits, and the one or more bits is used to carry indication information that instructs the UE to suspend the data duplication.

In some embodiments, the UE receives the data duplication suspending message sent by the network device.

For example, the network device is a core network device.

Optionally, the UE receives the data duplication suspending message sent by a UPF.

In the redundancy steering mode, the UE suspends the data duplication based on the received data duplication suspending message.

As shown in Fig. 2D, an embodiment of the present disclosure provides an information processing method. The method is performed by a UE, and includes the following step.

S1410, in response to suspending the data duplication, the uplink data is sent using the access leg.

The access leg is one of multiple accesses currently used by the UE, and the access leg is used for data transmission after the UE suspends the data duplication.

For example, the access leg may be either a 3GPP access or a non-3GPP access.

For example, the 3GPP access refers to an access based on a 3GPP radio protocol.

For example, the non-3GPP access requires an N3IWF to connect to a 3GPP 5G core network device. For example, a WLAN is connected to the 3GPP 5G core network device via the N3IWF.

In some embodiments, in response to receiving a data duplication suspending message and not configuring a primary access, an access leg is set.

The data duplication suspending message may be used to instruct the UE to suspend the data duplication when the UE is in a redundant steering mode.

For example, the data duplication suspending message includes one or more bits, and the one or more bits is used to carry indication information that instructs the UE to suspend the data duplication.

In some embodiments, the UE receives the data duplication suspending message sent by the network device.

For example, the network device is a core network device.

Optionally, the UE receives the data duplication suspending message sent by a UPF.

In the redundancy steering mode, the UE suspends the data duplication based on the received data duplication suspending message.

In some embodiments, the UE may set the access leg to an access leg indicated by the indication information carried in the data duplication suspending message.

In some embodiments, the data duplication suspending message does not carry the indication information, and the UE may set the access leg according to a local policy or a default configuration. Alternatively, the UE may determine whether to reset the access leg based on whether an access leg used for uplink data is same as an access leg used for downlink data.

In some embodiments, during the suspension of the data duplication, the UE may determine whether to reset the access leg based on whether the access leg used for the uplink data is same as the access leg used for the downlink data.

For example, during a period from suspending the data duplication until the UE receives a first downlink data packet, if the UE needs to send the uplink data, the UE sets the access leg. If the access leg used for the downlink data received by the UE is different from the access leg used by the uplink data, the UE may reset the access leg.

In some embodiments, the UE resets the access leg to the access leg used for the transmission of the downlink data.

By the UE checking the access legs used for the uplink data and the downlink data, and/or by the UE resetting the access leg, it can ensure that both the UE and network devices use the same access leg for data transmission. This reduces the problem of the out-of-order of the service time sequence caused by the UE and network devices transmitting data on different accesses, and improves the reliability of data transmission.

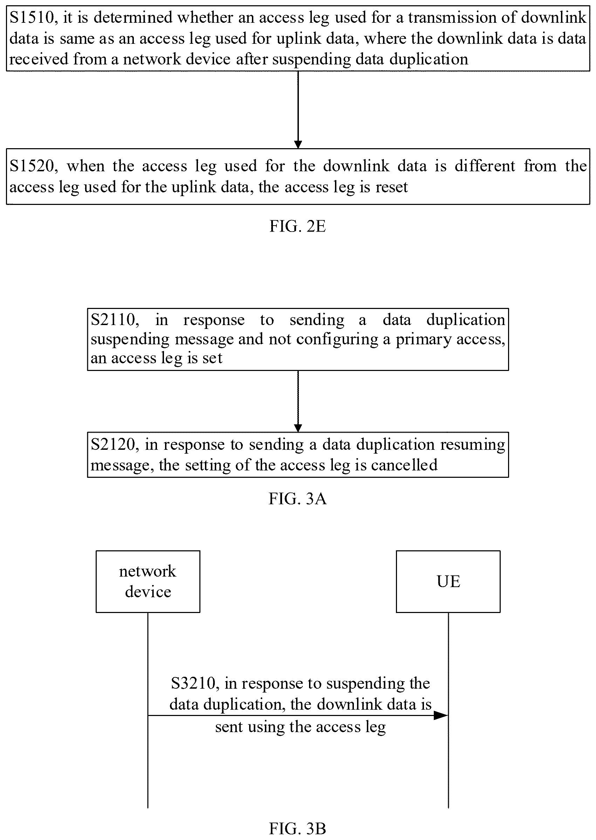

As shown in Fig. 2E, an embodiment of the present disclosure provides an information processing method. The method is performed by a UE, and includes the following step.

S1510, it is determined whether an access leg used for a transmission of downlink data is same as an access leg used for uplink data, where the downlink data is data received from a network device after suspending data duplication.

S1520, when the access leg used for the downlink data is different from the access leg used for the uplink data, the access leg is reset.

For example, the access leg may be either a 3GPP access or a non-3GPP access.

For example, the 3GPP access refers to an access based on a 3GPP radio protocol.

For example, the non-3GPP access requires an N3IWF to connect to a 3GPP 5G core network device. For example, a WLAN is connected to the 3GPP 5G core network device via the N3IWF.

In some embodiments, the UE resets the access leg to the access leg used for the transmission of the downlink data.

In some embodiments, after receiving the downlink data, the UE checks whether the access leg set by the UE is consistent with the access leg set by the network device.

By the UE checking the access legs used for the uplink data and the downlink data, and/or by the UE resetting the access leg, it can ensure that both the UE and network devices use the same access leg for data transmission. This reduces the problem of the out-of-order of the service time sequence caused by the UE and network devices transmitting data on different accesses, and improves the reliability of data transmission.

In some embodiments, if the UE determines that the access leg used for the uplink data is different from the access leg used for the downlink data, the network device may reset the access leg.

In some embodiments, if the access leg used for the uplink data is different from the access leg used for the downlink data, the network device may configure either the UE or the network device to perform a check on whether the access legs are consistent and/or to reset the access leg.

For example, if the access leg used for the uplink data is different from the access leg used for the downlink data, the UE may not reset the access leg when it receives a first downlink data packet after suspending the data duplication. If the UE receives a second downlink data packet, and an access leg used for the second downlink data packet is changed, i.e., the second downlink data packet uses the same access leg as the uplink data packet, it indicates that the network device has reset the access leg. In this case, the UE does not need to reset the access leg.

For example, if the access leg used for the uplink data is different from the access leg used for the downlink data, and a first downlink data packet and a second downlink data packet received by the UE after suspending the data duplication use the same access leg, it indicates that the network device has not reset the access leg. In this case, the UE may reset the access leg, so that the access leg used by the UE to send the uplink data is the same as the access leg used by the network device to send the downlink data

By setting the access leg, checking the access legs used for the uplink data and the downlink data, and/or resetting the access leg, the access leg used by the UE for the uplink data and the access leg used by the network device for the downlink data can be kept consistent. This reduces the problem of out-of-order of the service time sequence caused by the UE and the network device transmitting data on different accesses and improves the reliability of data transmission.

As shown in Fig. 3A, an embodiment of the present disclosure provides an information processing method. The method is performed by a network device, and the method includes the following steps.

S2110, in response to sending a data duplication suspending message and not configuring a primary access, an access leg is set, where the access leg is one of multiple accesses currently used by a UE, and the access leg is used for a data transmission after suspending data duplication.

S2120, in response to sending a data duplication resuming message, the setting of the access leg is cancelled.

For example, the network device is a core network device.

For example, the network device is a UPF.

For example, the multiple accesses currently used by the UE include a 3GPP access and a non-3GPP access.

For example, the access leg may be either a 3GPP access or a non-3GPP access.

For example, the 3GPP access refers to an access based on a 3GPP radio protocol. Generally, a connection to the core network is achieved via an access network.

For example, the non-3GPP access requires an N3IWF to connect to a 3GPP 5G core network device. For example, a WLAN is connected to the 3GPP 5G core network device via the N3IWF.

The data duplication suspending message may be used to instruct the UE to suspend the data duplication when the UE is in a redundant steering mode.

For example, the data duplication suspending message includes one or more bits, and the one or more bits are used to carry indication information that instructs the UE to suspend the data duplication.

In some embodiments, the network device sends the data duplication suspending message to the UE.

Optionally, the UPF sends the data duplication suspending message to the UE.

In the redundancy steering mode, for example, if the network device detects congestion, it may determine to suspend the data duplication and send the data duplication suspending message to the UE to instruct the UE to suspend the data duplication.

If no primary access is configured during the suspension of the data duplication, it is required to set the access leg, so that the UE and the network device may use a unified access leg for data interaction during the suspension of the data duplication.

For example, the network device may determine which access is the access leg based on the actual situation of different accesses. For example, a measurement results of the network device PMF may be used to select one of the accesses as the access leg to ensure that during the suspension of the data transmission, the network device and the UE can transmit data through an access with better conditions.

In some embodiments, as shown in FIG. 3A, the present disclosure provides an information processing method. The method is performed by a network device and includes:
setting an access leg in response to sending a data duplication suspending message and not configuring a primary access;
determining whether the access leg set by the UE is same as an access leg set by the network device; and
in response to the access leg set by the UE being different from the access leg set by the network device, changing the access leg set by the UE or the access leg set by the network device, to make the access leg set by the UE same as the access leg set by the network device.

For example, after determining to suspend data duplication, the network device may set the access leg based on a local policy or a default configuration.

For example: a random policy, which randomly selects one of the current accesses as the access leg.

The default configuration may specify the access leg.

After the network device determines the access leg and receives uplink data, it may determine whether the access leg set by the network device is same as the access leg set by the UE.

For example, if the access leg used for downlink data is different from the access leg used for the uplink data, the network device may reset the access leg to the access leg used for the uplink data.

If the access leg set by the UE is the same as the access leg set by the network device, the UE and the network device uses the access leg to interact with each other during the suspension of the data duplication.

In some embodiments, if the access leg set by the network device is different from the access leg set by the UE, the network device resets the access leg, and the access leg reset by the network device is same as the access leg of the UE.

In some other embodiments, the access leg set by the network device is different from the access leg set by the UE. The UE resets the access leg, and the access leg reset by the UE is the same as the access leg set by the network device.

In some embodiments, the access leg set by the UE is different from the access leg set by the network device. The network configures one of the UE and the network device to perform a check on whether the access legs are the same and to reset the access leg.

By setting the access leg, checking the access legs used for the uplink data and the downlink data, and resetting the access leg, the access leg used by the UE for the uplink data and the access leg used by the network device for the downlink data can be kept consistent. This reduces the problem of out-of-order of the service time sequence caused by the UE and the network device transmitting the data on different accesses, and improves the reliability of data transmission.

In some embodiments, the network device sending the data duplication suspending message to the UE includes: the network device sending the data duplication suspending message to the UE when detecting congestion.

In some embodiments, the data duplication suspending message carries type indication information, which indicates a type of service that is required to be suspended.

After receiving the data duplication suspending message carrying the type indication information, the UE suspends duplicating a data corresponding to the traffic type indicated by the type indication information.

There may be two or more types of data to be duplicated. Choosing to suspend the duplication of the data for some traffic types, rather than suspending the duplication of the data for all traffic types, can improve the congestion situation and help to ensure the reliability and low latency of the data during the communication.

In some embodiments, prior to step S2120, the information processing method further includes: the network device sending a data duplication resuming message to the UE.

Once the network device detects that the congestion situation is improved, it may send the data duplication resuming message.

The data duplication resuming message instructs to resume the data duplication.

The data duplication resuming message may be a request message sent by the network device to the UE when the congestion situation is improved.

The UE resumes the data duplication based on the received data duplication resuming message.

After resuming the data duplication, by canceling the setting of the access leg, the access settings of the UE and the network device before suspending the data duplication can be resumed, reducing the communication anomalies caused by differences in access settings before and after the data duplication is suspended.

In some embodiments, the data duplication suspending message includes indication information of the access leg.

The network device may carry the indication information in the data duplication suspending message, and may use the indication information to instruct the UE to set the access leg.

For example, the indication information includes a setting field. If the setting field indicates that a 3GPP access is the access leg, the UE sets the 3GPP access as the access leg. If the setting field indicates that a non-3GPP access is the access leg, then the UE sets the 3GPP access as the access leg.

In some embodiments, the data duplication suspending message does not include indication information of the access leg.

During the period of the suspension of the data duplication, the network device may set the access leg based on the access leg determined by the UE, so that the access leg determined by the network device is consistent with the access determined by the UE.

In some embodiments, during the suspension of the data duplication, the network device may determine the access leg based on a received uplink data.

For example, if the uplink data received by the network device comes from a 3GPP access, the network device senses that the access leg determined by the UE is the 3GPP access, and the network device may set the access leg to the 3GPP access.

For another example, during a period from suspending the data duplication until the network device receives a first uplink data packet, if the network device does not have any downlink data to send, the network device may temporarily not set the access leg, and the network device may then set the access leg based on the first uplink data received.

In some embodiments, during the suspension of the data duplication, the network device may determine whether to reset the access leg based on whether the access leg used for uplink data is same as the access leg used for downlink data.

For example, during the period from suspending the data transmission until the network device receives a first uplink data packet, if the network device needs to send the downlink data, the network device sets the access leg. If the access leg used for the uplink data received by the network device is different from the access leg used for the downlink data, the network device may reset the access leg.

In some embodiments, the network device resets the access leg to the access leg used for the transmission of the uplink data.

Resetting the access leg by the network device allows both the UE and the network device to use the same access leg mode to transmit data, reducing the problem of out-of-order of the time sequence caused by the UE and the network device transmitting data on different accesses and improving the reliability of data transmission.

In some embodiments, the network device determines that the access leg used for the uplink data is different from the access leg used for the downlink data, and the UE may reset the access leg.

In some embodiments, if the access leg used for the uplink data is different from the access leg used for the downlink data, either the UE or the network device is configured to reset the access leg, i.e., resetting the access leg when the access legs are different.

For example, if the access leg used for the uplink data is different from the access leg used for the downlink data, the network device may not reset the access leg when it receives a first uplink data packet after suspending the data duplication. If the network device receives a second uplink data packet and the access of the second uplink data packet is the same as that of a downlink data packet, it indicates that the UE has reset the access leg. In this case, the network device does not need to reset the access leg.

For example, if the access leg used for the uplink data is different from the access leg used for the downlink data, and the first uplink data packet and the second uplink data packet received by the network device after suspending the data duplication use the same access leg, it indicates that the UE has not reset the access leg. In this case, the network device may reset the access leg, so that the access leg used by the UE to send the uplink data is the same as the access leg used by the network device to send downlink data.

As shown in Fig. 3B, an embodiment of the present disclosure provides an information processing method. The method is performed by a network device, and the method includes the following step.

S3210, in response to suspending the data duplication, the downlink data is sent using the access leg.

The access leg is one of multiple accesses currently used by the UE, and the access leg is used for data transmission after the network device suspends the data duplication.

For example, the access leg may be either a 3GPP access or a non-3GPP access.

For example, the 3GPP access refers to an access based on a 3GPP radio protocol. Generally, a connection to the core network is achieved via an access network.

For example, the non-3GPP access requires an N3IWF to connect to a 3GPP 5G core network device. For example, a WLAN is connected to the 3GPP 5G core network device via the N3IWF.

In some embodiments, in response to sending the data duplication suspending message and not configuring the primary access, the access leg is set.

The data duplication suspending message may be used to instruct the UE to suspend the data duplication when the UE is in a redundant steering mode.

For example, the data duplication suspending message includes one or more bits, and the one or more bits are used to carry indication information that instructs the UE to suspend the data duplication.

In some embodiments, the network device sends the data duplication suspending message to the UE.

For example, the network device is a core network device.

Optionally, a UPF sends the data duplication suspending message to the UE.

In the redundancy steering mode, the UE suspends the data duplication based on the received data duplication suspending message.

In some embodiments, the data duplication suspending message does not carry indication information, and the network device may determine which access is the access leg based on a local policy.

For example: a random policy, which randomly selects one of the current accesses as the access leg.

After the network device determines the access leg and receives uplink data, it may determine whether the access leg set by the UE is same as the access leg set by the network device.

For example, if the access leg used for downlink data is different from the access leg used for the uplink data, the network device may reset the access leg to the access leg used for the uplink data.

If the access leg set by the UE is the same as the access leg set by the network device, the UE and the network device uses the access leg to interact with each other during the suspension of the data duplication.

In some embodiments, the network device may carry the indication information in the data duplication suspending message, instructing the UE to set the access leg to the access leg indicated by the indication information.

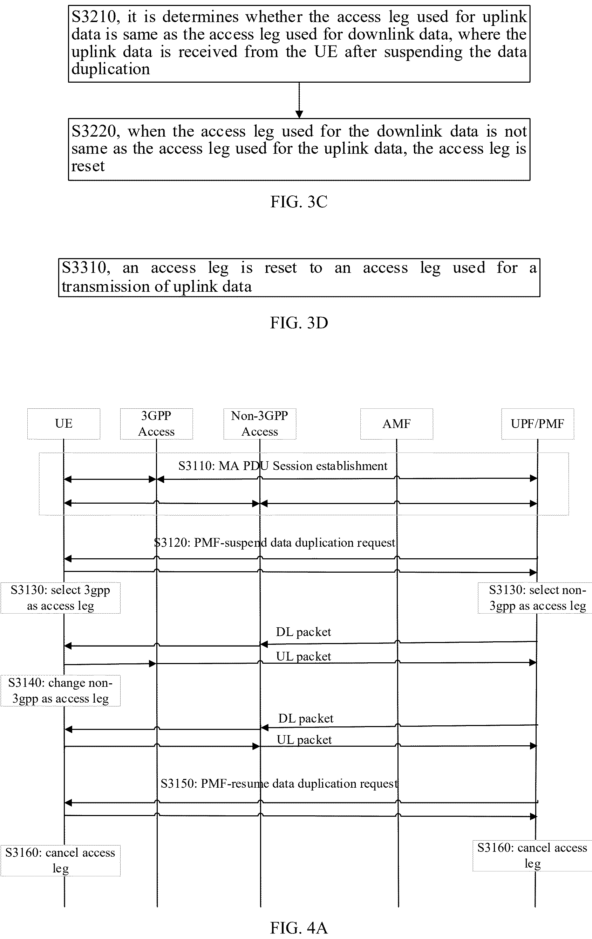

As shown in Fig. 3C, an embodiment of the present disclosure provides an information processing method. The method is performed by a network device and includes the following steps.

S3210, it is determines whether the access leg used for uplink data is same as the access leg used for downlink data, where the uplink data is received from the UE after suspending the data duplication.

S3220, when the access leg used for the downlink data is not same as the access leg used for the uplink data, the access leg is reset.

For example, the access leg may be either a 3GPP access or a non-3GPP access.

For example, the 3GPP access refers to an access based on a 3GPP radio protocol.

For example, the non-3GPP access requires an N3IWF to connect to a 3GPP 5G core network device. For example, a WLAN is connected to the 3GPP 5G core network device via the N3IWF.

In some embodiments, the network device resets the access leg to the access leg used for the uplink data transmission.

In some embodiments, after receiving the uplink data, the network device determines whether the access leg set by the network device is consistent with the access leg set by the UE.

By the network device checking the access legs used for the uplink and downlink data, and/or resetting the access leg, the UE and the access leg both use the same access leg for the data transmission. This reduces the problem of out-of-order of the service time sequence caused by the UE and the network device transmitting the data on different accesses, and improves the reliability of data transmission.

In some embodiments, when the network device determines that the access leg used for the uplink data is different from the access leg used for the downlink data, and the network device retains the configured access leg, in this case, the UE may reset the access leg.

In some embodiments, if the access leg used for the uplink data is different from the access leg used for the downlink data, the network device configures either the UE or the network device to perform a check to determine whether the access legs are consistent and/or to reset the access leg.

For example, if the access leg used for the uplink data is different from the access leg used for the downlink data, the network device may not reset the access leg when it receives a first uplink data packet after suspending the data duplication. If the network device receives a second uplink data packet and the access of the second uplink data packet is the same as that of the downlink data packet, it indicates that the UE has reset the access leg. In this case, the network device does not need to reset the access leg.

For example, if the access leg used for the uplink data is different from the access leg used for the downlink data, and a first uplink data packet and a second uplink data packet received by the network device after suspending the data duplication use the same access leg, it indicates that the UE has not reset the access leg. In this case, the network device may reset the access leg, so that the access leg used by the UE to send the uplink data is the same as the access leg used by the network device to send the downlink data.

By setting the access leg, checking the access legs used for the uplink and downlink data, and/or resetting the access leg, the access leg used by the UE for the uplink data and the access leg used by the network device for the downlink data can be kept consistent. This reduces the problem of out-of-order of the service time sequence caused by the UE and the network device transmitting the data on different accesses, and improves the reliability of data transmission.

As shown in Fig. 3D, an embodiment of the present disclosure provides an information processing method. The method is performed by a network device, and the method includes the following step.

S3310, an access leg is reset to an access leg used for a transmission of uplink data.

Resetting the access leg by the network device allows both the UE and the network device to use the same access leg to transmit data, reducing the problem of out-of-order of the service time sequence caused by the UE and the network device transmitting the data on different accesses, and improves the reliability of data transmission.

In some embodiments, before step S3210, the information processing method further includes: in response to sending a data duplication suspending message and not configuring a primary access, setting the access leg, where the access leg is one of multiple accesses currently used by the UE, and the access leg is used for data transmission after suspending data duplication according to the data duplication suspending message.

For example, the access leg may be either a 3GPP access or a non-3GPP access.

For example, the 3GPP access refers to an access based on a 3GPP radio protocol.

For example, the non-3GPP access requires an N3IWF to connect to a 3GPP 5G core network device. For example, a WLAN is connected to the 3GPP 5G core network device via the N3IWF.

The data duplication suspending message may be used to instruct the UE to suspending the data duplication when the UE adopts a redundant steering mode for backup transmission.

For example, the data duplication suspending message includes one or more bits, and the one or more bits is used to carry indication information that instructs the UE to suspend the data duplication.

In some embodiments, the network device sends the data duplication suspending message to the UE.

Optionally, a UPF sends the data duplication suspending message to the UE.

In some embodiments, if the access leg used for the uplink data is different from the access leg used for the downlink data, the network device resets the access leg, and the access leg reset by the network device is the same as the access leg of the UE.

In some other embodiments, the access leg used for the uplink data is different from the access leg used for the downlink data. The UE resets the access leg, and the access leg reset by the UE is the same as the access leg set by the network device.

In some embodiments, the access leg used for the uplink data is different from the access leg used for the downlink data. Either the UE or the network device may choose to reset the access leg, i.e., the UE or the network device do not reset the access leg at the same time.

As shown in Fig. 4A, an embodiment of the present disclosure provides an information processing method. The method includes the following steps.

S3110, a multi-access PDU (MA PDU) session is established. A UE accesses a 5G core network (5G Core, or 5GC) via a 3GPP access and a non-3GPP access. If both the UE and the network support an ATSSS, the MA PDU session is established.

S3120, a PMF-suspend data duplication request is sent. If both the UE and the UPF support a redundant steering mode and no primary access is configured, the UE and the UPF duplicate all data packets of a service data flow (SDF) on the both accesses. If the UPF detects congestion, it sends the PMF-suspend data duplication request message to the UE. The PMF-suspend data duplication request message may include a traffic type to indicate which type of traffic to be suspended.

S3130, the UE selects a 3GPP as an access leg, while the UPF selects a non-3GPP as the access leg. When the UE receives the PMF-suspend data duplication request message from the UPF, the UE suspends the data flow duplication for the traffic type. Meanwhile, since no primary access is configured, the UE and the UPF may select the access leg to transmit the data traffic based on their implementations. The access legs selected by the UPF and the UE may be different. For example, the UPF may choose the non-3GPP as the access leg, while the UE may choose the 3GPP as the access leg.

The UE sends an uplink data packet to the UPF via the 3GPP access, and the UPF sends a downlink data packet to the UE via the non-3GPP access.

S3140, the UE changes the access leg mode to the non-3GPP access mode. When the UE receives the downlink data packet from the non-3GPP access, it detects that the access leg selected by the UPF is different from the access leg selected by the UE. The UE changes its access leg from the 3GPP access to the non-3GPP access.

This step assumes that the UE performs a check to see whether the access legs are consistent. The UPF may also perform this operation. However, during a suspension period, only one side performs the operation.

As shown in Fig. 4A, between steps S3140 and S3150: both the UE and the UPF use the non-3GPP access leg to transmit data traffic (transmission of the DL data packet and the UL data packet in Fig. 4A).

S3150, a PMF-resume data duplication request is sent. The UPF decides to resume the data duplication and sends the PMF-resume data duplication request message to the UE.

S3160, when the UE receives the message (referring to the PMF-resume data duplication request), data duplication is resumed and the access leg is cancelled. When the UPF receives a response message, the UPF also cancels the access leg.

In some embodiments, when the UE receives the PMF-suspend duplication request message from the UPF and no primary access is configured, the UE and the UPF determine which access to use as the access leg based on their implementations, so that they may send data packets respectively.

The UE and the UPF may choose different access legs to send the data packets, which will cause the time sequence of the UL and DL packets of the unified service data flow to be out of sync. If the UE selects a different access for sending the DL packets than the one used for sending the DL packets, the UE will reselect the access for sending the DL packets. The reselection may also be performed by the UPF. However, during one suspension, only one side performs the process. That is, when the access leg used for the uplink data packets and the access leg used for the downlink data packets are inconsistent, only one of the UE or UPF can reselect the access.

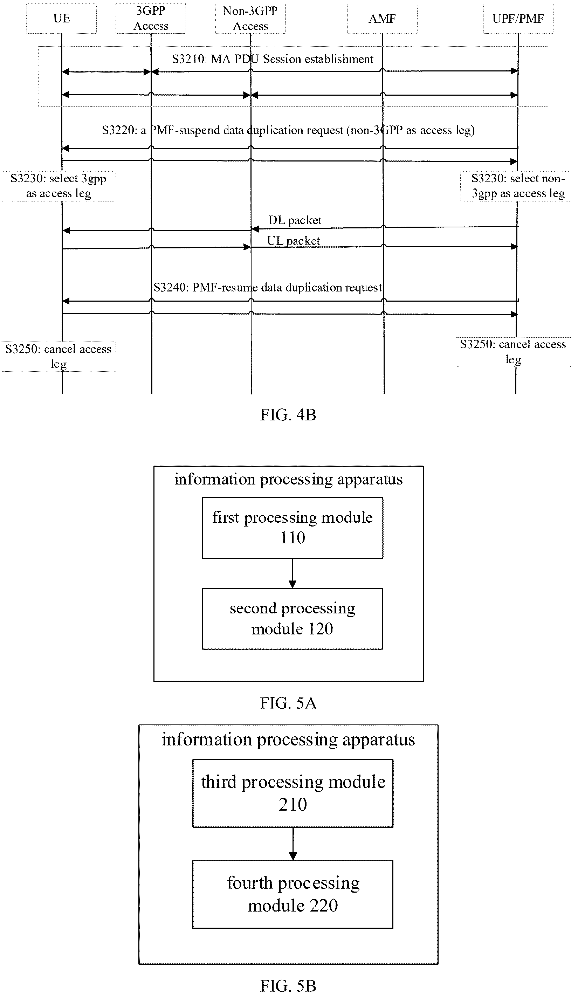

As shown in Fig. 4B, an embodiment of the present disclosure provides an information processing method. The method includes the following steps.

S3210, a multi-access PDU (MA PDU) session is established. A UE accesses a 5GC via a 3GPP access and a non-3GPP access. If both the UE and the network support an ATSSS, the MA PDU session is established

S3220, a PMF-suspend data duplication request is sent (a non-3GPP access is an access leg). If both the UE and the UPF support a redundant steering mode and no primary access is configured, the UE and the UPF duplicate all data packets of a service data flow on the both accesses. If the UPF detects congestion, it sends the PMF-suspend data duplication request message to the UE. The PMF-suspend data duplication request message may include a traffic type to indicate which type of traffic to be suspended. The UPF selects a non-3GPP access as the access leg and includes a corresponding indication (indicating the non-3GPP access is the access leg) in the PMF-suspend data duplication request message.

S3230, the UE selects the non-3GPP access as the access leg according to the indication. When the UE receives the PMF-suspend data duplication request message from the UPF, the UE will stop the duplication of the data flow of the traffic type. Meanwhile, since no primary access is configured, the UE selects the non-3GPP access as the access leg.

Both the UE and UPF use the non-3GPP access as the access leg to transmit data traffic (transmission of DL data packets and UL data packets in Fig. 4B).

S3240, a PMF-resume data duplication request is sent. The UPF decides to resume the data duplication and sends the PMF-Resume data duplication request message to UE.

S3250, when the UE receives the message (referring to the PMF-resume data duplication request), data duplication is resumed and the access leg is cancelled. When the UPF receives a response message, the UPF also cancels the access leg.

In some embodiments, the UPF may indicate the access leg in the PMF-suspend data duplication request message. Upon receiving the indication information, during the suspension of the duplication, both the UE and the UPF send data packets using the access leg indicated by the indication information.

If the UE receives the PMF-resume data duplication request message, it cancels the access leg.

As shown in Fig. 5A, an embodiment of the present disclosure provides an information processing apparatus. The apparatus includes:
a first processing module 110, configured to set an access leg in response to receiving a data duplication suspending message and not configuring a primary access, where the access leg is one of multiple accesses currently used by the UE, and the access leg is used for a data transmission after suspending data duplication; and
a second processing module 120, configured to cancel the setting of the access leg in response to receiving a data duplication resuming message.

In some embodiments, the information processing apparatus may include a UE.

In some embodiments, the first processing module 110 and the second processing module 120 may be program modules, which, after being executed by the processor, can perform the above operations.

In some other embodiments, the first processing module 110 and the second processing module 120 may be hardware-software hybrid modules, and the hardware-software hybrid modules include, but are not limited to, programmable arrays.

In some other embodiments, the first processing module 110 and the second processing module 120 may be pure hardware modules, and the pure hardware modules include, but are not limited to, application-specific integrated circuits.

In some embodiments, the first processing module 110 is configured to perform at least one of:
in response to the received data duplication suspending message carrying indication information indicating the access leg, setting the access leg according to the indication information; or
in response to the received data duplication suspending message not carrying indication information indicating the access leg, selecting one of the multiple accesses currently used by the UE as the access leg.

In some embodiments, the information processing apparatus further includes:
a first sending module, configured to send uplink data using the access leg in response to suspending the data duplication.

In some embodiments, the first processing module 110 is configured to:
determine whether an access leg used for a transmission of downlink data is same as an access leg used for uplink data, where the downlink data is data received from a network device after suspending the data duplication; and
in response to the access leg used for the downlink data being different from the access leg used for the uplink data, resetting the access leg.

In some embodiments, the first processing module 110 is configured to: reset the access leg to the access leg used for the transmission of the downlink data.

As shown in Fig. 5B, an embodiment of the present disclosure provides an information processing apparatus. The apparatus includes:
a third processing module 210, configured to set an access leg in response to sending a data duplication suspending message and not configuring a primary access, where the access leg is one of multiple accesses currently used by a UE, and the access leg is used for data transmission after suspending data duplication; and
a fourth processing module 220, configured to cancel the setting of the access leg in response to sending a data duplication resuming message.

In some embodiments, the information processing apparatus may include a network device. For example, the information processing devices includes a core network. For example, the information processing devices include a UPF.

In some embodiments, the third processing module 210 and the fourth processing module 220 may be program modules, which, after being executed by the processor, can perform the above operations.

In other embodiments, the third processing module 210 and the fourth processing module 220 may be hardware-software hybrid modules; and such hardware-software hybrid modules include, but are not limited to, programmable arrays.

In some embodiments, the third processing module 210 and the fourth processing module 220 may be pure hardware modules; and the pure hardware modules include, but are not limited to, application-specific integrated circuits.

In some embodiments, the data duplication suspending message includes indication information of the access leg.

In some embodiments, the data duplication suspending message does not include indication information of the access leg.

In some embodiments, the information processing apparatus further includes:
a second sending module, configured to send downlink data using the access leg in response to suspending the data duplication.

In some embodiments, the third processing module 210 is configured to:
determine whether an access leg used for uplink data is same as an access leg used for downlink data, where the uplink data is data received from the UE after suspending the data duplication; and
in response to the access leg used for the downlink data being different from the access leg used for the uplink data, reset the access leg.

In some embodiments, the third processing module 210 is configured to reset the access leg to the access leg used for a transmission of the uplink data.

The present disclosure provides a communication device, the device including:
a memory configured to store processor-executable instructions;
at least one processor connected to the memory respectively;

The processor is configured to execute the information processing method provided by any of the aforementioned technical solutions.

The processor may include various types of storage media, which are non-transitory computer storage media that can continue to store information after the communication device loses power.

Here, the communication device includes a terminal and/or a network device.

The processor may be connected to the memory via a bus or the like to read executable programs stored in the memory, for example, at least one of the methods shown in Figures 2A to 4B.

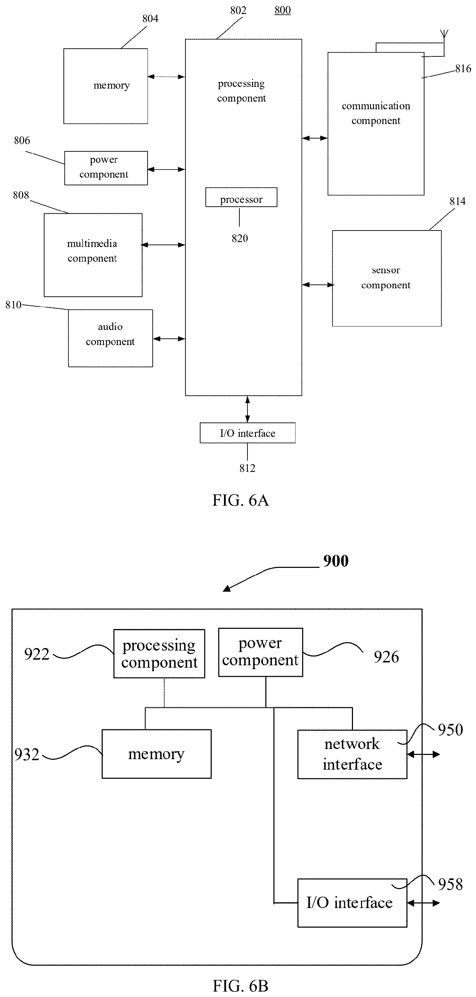

Fig. 6A is a block diagram illustrating a terminal 800 according to an example embodiment. For example, terminal 800 may be a mobile phone, computer, digital broadcast user equipment, messaging device, game console, tablet device, medical device, fitness equipment, personal digital assistant, etc.

Referring to Fig. 6A, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls the overall operation of the terminal 800, such as operations associated with display, telephone calls, data communication, camera operation, and recording operation. The processing component 802 may include one or more processors 820 to execute instructions to perform all or part of the steps of the methods described above. In addition, the processing component 802 may include one or more modules to facilitate the interaction between the processing component 802 and other components. For example, the processing component 802 may include a multimedia module to facilitate interaction between the multimedia component 808 and the processing component 802.

The memory 804 is configured to store various types of data to support the operation of the terminal 800. Examples of the data include instructions for any application or method operating on the terminal 800, contact data, phonebook data, messages, pictures, videos, etc. The memory 804 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic storage, a flash memory, a magnetic disk or an optical disk.

The power component 806 provides power to the various components of the terminal 800. The power component 806 may include a power management system, one or more power supplies, and other components associated with generating, managing, and distributing power to the terminal 800.

The multimedia component 808 includes a screen that provides an output interface between the terminal 800 and the user. In some embodiments, the screen may include a liquid crystal display (LCD) and a touch panel (TP). If the screen includes a touch panel, the screen can be implemented as a touchscreen to receive input signals from the user. The touch panel includes one or more touch sensors to sense touches, swipes, and gestures on the touch panel. Touch sensors may not only sense the boundaries of touch or swipe actions, but also detect the duration and pressure associated with the touch or swipe operation. In some embodiments, the multimedia component 808 includes a front-facing camera and/or a rear-facing camera. When the terminal 800 is in an operating mode, such as shooting mode or video mode, the front camera and/or rear camera may receive external multimedia data. Each front-facing and rear-facing camera can be a fixed optical lens system or have focal length and optical zoom capabilities.

The audio component 810 is configured to output and/or input audio signals. For example, the audio component 810 includes a microphone (MIC) that is configured to receive external audio signals when the terminal 800 is in an operating mode, such as call mode, recording mode, and voice recognition mode. The received audio signal may be further stored in the memory 804 or transmitted via the communication component 816. In some embodiments, the audio component 810 further includes a speaker for outputting audio signals.

The I/O interface 812 provides an interface between the processing component 802 and peripheral interface modules, such as a keyboard, a click wheel, a button, etc. The buttons may include, but is not limited to: a home button, a volume button, a start button, and a lock button.

The sensor component 814 includes one or more sensors for providing various aspects of status assessment for the terminal 800. For example, the sensor component 814 may detect the on/off state of the terminal 800, the relative positioning of components, such as the display and keypad of the terminal 800. The sensor component 814 may also detect changes in the position of the terminal 800 or a component of the terminal 800, the presence or absence of user contact with the terminal 800, the orientation or acceleration/deceleration of the terminal 800, and temperature changes of the terminal 800. The sensor component 814 may include a proximity sensor configured to detect the presence of a nearby object without any physical contact. The sensor component 814 may also include a light sensor, such as a CMOS or CCD image sensor, for use in imaging applications. In some embodiments, the sensor component 814 may also include an accelerometer, a gyroscope, a magnetometer, a pressure sensor, or a temperature sensor.

The communication component 816 is configured to facilitate wired or wireless communication between the terminal 800 and other devices. The terminal 800 may access wireless networks based on communication standards, such as Wi-Fi, 2G or 3G, or a combination thereof. In an example embodiment, the communication component 816 receives broadcast signals or broadcast-related information from an external broadcast management system via a broadcast channel. In an example embodiment, the communication component 816 further includes a near field communication (NFC) module to facilitate short-range communication. For example, the NFC module may be implemented based on radio frequency identification (RFID) technology, Infrared Data Association (IrDA) technology, ultra-wideband (UWB) technology, Bluetooth (BT) technology, and other technologies.

In an example embodiment, the terminal 800 may be implemented by one or more application-specific integrated circuits (ASICs), digital signal processors (DSPs), digital signal handling devices (DSPDs), programmable logic devices (PLDs), field-programmable gate arrays (FPGAs), controllers, microcontrollers, microprocessors, or other electronic components to perform the methods described above.

In an example embodiment, there is also provided a non-transitory computer-readable storage medium including instructions, such as the memory 804 including instructions, which may be executed by the processor 820 of the terminal 800 to perform the above methods. For example, the non-transitory computer-readable storage media may be a ROM, a random access memory (RAM), a CD-ROM, a magnetic tape, a floppy disk, and an optical data storage device.

As shown in Fig. 6B, an embodiment of the present disclosure illustrates a structure of a network device. For example, the network device 900 may be provided as a network-side device. The communication device may be any of the aforementioned access network elements and/or network functions.

Referring to Fig. 6B, the network device 900 includes a processing component 922, which further includes one or more processors, and memory resources represented by a memory 932 for storing instructions, such as applications, that can be executed by the processing component 922. The application program stored in the memory 932 may include one or more modules, each corresponding to a set of instructions. Furthermore, the processing component 922 is configured to execute instructions to perform any of the methods described above applied to the network device, for example, any method shown in Figs. 2A-2E, or in Figs. 3A-3D, or in Figs. 4A-4B.

The network device 900 may also include a power component 926 configured to perform power management of the network device 900, a wired or wireless network interface 950 configured to connect the network device 900 to a network, and an input/output (I/O) interface 958. The network device 900 may operate on an operating system stored in the memory 932, such as Windows Server^{™}, Mac OS X^{™}, Unix^{™}, Linux^{™}, FreeBSD^{™}, or similar.

Unless otherwise specified, each step in a particular implementation or embodiment may be implemented as an independent embodiment, and the steps may be arbitrarily combined. For example, the solution after removing some steps in a particular implementation or embodiment may also be implemented as an independent embodiment, and the order of the steps in a particular implementation or embodiment may be arbitrarily interchanged. In addition, the optional methods or examples in a particular implementation or embodiment may be arbitrarily combined. Furthermore, the implementations or embodiments may be arbitrarily combined with each other. For example, some or all of the steps in different implementations or embodiments may be arbitrarily combined, and a particular implementation or embodiment may be arbitrarily combined with the optional methods or examples of other implementations or embodiments.

Other embodiments of the present disclosure will readily occur to those skilled in the art upon consideration of the specification and practice of the present disclosure. The present disclosure is intended to cover any variations, uses, or adaptations of the embodiments that follow the general principles of the present disclosure and include common knowledge or customary techniques in the art that are not disclosed herein. The description and examples are to be considered exemplary only, and the true scope and spirit of the present disclosure are indicated by the following claims.

It should be understood that the present disclosure is not limited to the precise structure described above and shown in the accompanying drawings, and various modifications and changes can be made without departing from its scope. The scope of the present disclosure is limited only by the appended claims.

## Claims

1. An information processing method, performed by a user equipment (UE), comprising:
setting an access leg in response to receiving a data duplication suspending message and not configuring a primary access, wherein the access leg is one of multiple accesses currently used by the UE, and the access leg is used for a data transmission after suspending data duplication; and
cancelling the setting of the access leg in response to receiving a data duplication resuming message.

2. The method according to claim 1, setting the access leg comprises:
in response to the received data duplication suspending message carrying indication information indicating the access leg, setting the access leg according to the indication information; or
in response to the received data duplication suspending message not carrying indication information indicating the access leg, selecting one of the multiple accesses currently used by the UE as the access leg.

3. The method according to claim 2, further comprising:
in response to suspending the data duplication, sending uplink data using the access leg.

4. The method according to claim 1, further comprising:
determining whether an access leg used for a transmission of downlink data is same as an access leg used for uplink data, wherein the downlink data is data received from a network device after suspending the data duplication; and
in response to the access leg used for the downlink data being different from the access leg used for the uplink data, resetting the access leg.

5. The method according to claim 4, wherein resetting the access leg comprises:
resetting the access leg to the access leg used for the transmission of the downlink data.

6. An information processing method, performed by a network device, comprising:
setting an access leg in response to sending a data duplication suspending message and not configuring a primary access, wherein the access leg is one of multiple accesses currently used by a user equipment (UE), and the access leg is used for a data transmission after suspending data duplication; and
cancelling the setting of the access leg in response to sending a data duplication resuming message.

7. The method according to claim 6, wherein the data duplication suspending message comprises indication information of the access leg.

8. The method according to claim 6, wherein the data duplication suspending message does not comprise indication information of the access leg.

9. The method according to claim 7, further comprising:
in response to suspending the data duplication, sending downlink data using the access leg.

10. The method according to claim 8, further comprising:
determining whether an access leg used for uplink data is same as an access leg used for downlink data, wherein the uplink data is data received from the UE after suspending the data duplication; and
in response to the access leg used for the downlink data being different from the access leg used for the uplink data, resetting the access leg.

11. The method according to claim 10, wherein resetting the access leg comprises:
resetting the access leg to the access leg used for a transmission of the uplink data.

12. An information processing apparatus, comprising:
a first processing module, configured to set an access leg in response to receiving a data duplication suspending message and not configuring a primary access, wherein the access leg is one of multiple accesses currently used by the UE, and the access leg is used for a data transmission after suspending data duplication based on the data duplication suspending message; and
a second processing module, configured to cancel the setting of the access leg in response to receiving a data duplication resuming message.

13. An information processing apparatus, comprising:
a third processing module, configured to set an access leg in response to sending a data duplication suspending message and not configuring a primary access, wherein the access leg is one of multiple accesses currently used by a user equipment (UE), and the access leg is used for a data transmission after suspending data duplication; and
a fourth processing module, configured to cancel the setting of the access leg in response to sending a data duplication resuming message.

14. A communication device, comprising a processor, a transceiver, a memory, and an executable program stored in the memory and executable by the processor, wherein when the processor executes the executable program, the processor performs the information processing method according to any one of claims 1 to 5 or according to any one of claims 6 to 11.

15. A computer storage medium storing an executable program, wherein the executable program, when executed by a processor, enables implementing the information processing method according to any one of claims 1 to 5 or according to any one of claims 6 to 11.
